# EUROPEAN PATENT APPLICATION

(11) **EP 3 929 262 A1**
(43) Date of publication of application: **29.12.2021**
(21) Application number: 19916388.2
(22) Date of filing: 19.02.2019
(51) Int. Cl.: C09J 133/06, C09J 7/38, G02F 1/1333

(54) **ACRYLIC PRESSURE-SENSITIVE ADHESIVE COMPOSITION, PRESSURE-SENSITIVE ADHESIVE TAPE, AND OPTICAL DEVICE INCLUDING OPTICAL SHEET FIXED BY SAID PRESSURE-SENSITIVE ADHESIVE TAPE**

(71) Applicant: Teraoka Seisakusho Co., Ltd., Tokyo 140-8711 (JP)
(72) Inventor: KUSANO, Daichi, Tokyo 140-8711 (JP); ISHIKAWA, Kazuki, Tokyo 140-8711 (JP)
(74) Representative: J A Kemp LLP
(86) International application number: PCT/JP2019/006170
(87) International publication number: WO 2020/170342

(57) **Abstract**

An acrylic adhesive composition comprising an acrylic copolymer (A), which comprises an alkyl (meth)acrylate monomer (a1) having a linear and/or branched alkyl group having 6 to 10 carbon atoms and a nitrogen-containing monomer (a2), as the components of the polymer chains of the acrylic copolymer (A), wherein the acrylic adhesive composition has an amount of change within 0.5 of the value of the loss tangent (tan δ) in the range of 20°C to 100°C, and an adhesive tape having at least one acrylic adhesive layer composed of this acrylic adhesive composition are disclosed.

## Description

### Technical field

The present invention relates to an acrylic adhesive composition and an adhesive tape, and an optical device having an optical sheet fixed by the adhesive tape. More specifically, the present invention relates to an acrylic adhesive composition and an adhesive tape which are useful for fixing an optical sheet in an optical device (for example, for sticking an optical sheet of various types to a body or housing in a liquid crystal display).

### Background Art

An optical sheet for improving a display characteristics is used in a liquid crystal display unit in a mobile terminal such as a smartphone. This optical sheet may sometimes be fixed to the liquid crystal display unit by means of a double-sided adhesive tape. Specifically, there is a method of sticking a double-sided adhesive tape to, for example, one or more side areas of an optical sheet.

In recent years, as screen sizes of mobile terminals have increased, the size of each device member such as an optical sheet has also increased. As a result, the size change of each device member due to temperature change also becomes large, which may cause wrinkles in the optical film and make the displayed image unclear.

Patent Document 1 discloses an adhesive tape in which an adhesive layer to be in contact with an optical film has a specific loss tangent and storage elastic modulus, and a base material has a specific shrinkage ratio. It is explained that when this adhesive tape is used for fixing the LCD panel to the backlight housing, distortion of the optical film can be prevented and peeling off does not occur.

### [Prior Art Document]

### [Patent Document]

[Patent Document 1] Japanese Patent Laid-Open No. 2008-248226, i.e., JP,2008-248226,A or JP2008248226 (A).

### Summary of the Invention

### Problem to be Solved by the Invention

However, in the working examples of Patent Document 1, the distortion prevention property of the optical film (30 mm × 40 mm) having a relatively small size is the only property evaluated. On the other hand, the present inventors have focused on the fact that wrinkles are likely to generate due to temperature change in a devise member(s) such as optical films, the sizes of which have become larger in recent years, and then the present inventors have aimed to suppress the generation of these wrinkles.

Therefore, the object of the present invention is to provide an acrylic adhesive composition and an adhesive tape that can suppress such generation of wrinkles due to size changes of a device member(s) caused by temperature change, and an optical device having an optical sheet fixed by the adhesive tape.

### Means for Solving the Problem

The present inventors have intensively studied to achieve the above-described object and resultantly found that an adhesive composition in which the viscoelastic behavior at a high temperature is close to the viscoelastic behavior at normal temperature, specifically, an adhesive composition in which the loss tangent (tan δ) at a high temperature is close to the loss tangent (tan δ) at normal temperature, is very effective, leading to completion of the present invention.

The acrylic adhesive composition of the present invention comprising an acrylic copolymer (A), which comprises an alkyl (meth)acrylate monomer (a1) having a linear and/or branched alkyl group having 6 to 10 carbon atoms and a nitrogen-containing monomer (a2), as the components of polymer chains of the acrylic copolymer (A),
wherein an amount of change in the loss tangent (tan δ) value of the acrylic adhesive composition in the range of 20°C to 100°C is within 0.5.

The adhesive tape of the present invention comprises at least one acrylic adhesive layer comprising the above-mentioned acrylic adhesive composition.

The optical device of the present invention has an optical sheet fixed by the above-mentioned adhesive tape.

### Effect of the invention

The acrylic adhesive composition and the adhesive tape of the present invention have an action of relieving the stress generated by a size change of a device member(s) due to temperature change. As a result, the generation of wrinkles on the device member(s) is suppressed. Accordingly, the acrylic adhesive composition and the adhesive tape of the present invention can be suitably used, for example, for an application of fixing an optical sheet in an optical device.

### Brief Explanation of Drawings

FIG. 1 is a schematic cross-sectional view showing an embodiment of the adhesive tape of the present invention.
FIG. 2 is a schematic cross-sectional view showing an embodiment of the adhesive tape of the present invention.
FIG. 3 is a schematic cross-sectional view showing an embodiment of the adhesive tape of the present invention.

### Modes for Carrying Out the Invention

### <Acrylic adhesive composition>

The acrylic adhesive composition of the present invention comprises an acrylic copolymer (A), which comprises an alkyl (meth)acrylate monomer (a1) having a linear and/or branched alkyl group having 6 to 10 carbon atoms and a nitrogen-containing monomer (a2), as the components of the polymer chains of the acrylic copolymer (A), i.e., the constituent components forming the polymer chains. The meaning of "(meth)acrylate" as the generic term including both of an acrylate and a methacrylate.

The alkyl (meth)acrylate monomer (a1), which has a linear and/or branched alkyl group having 6 to 10 carbon atoms, fomes the polymer chains as the components thereof. Concrete examples thereof include n-hexyl (meth)acrylate, n-octyl (meth)acrylate, isooctyl (meth)acrylate, 2-ethylhexyl (meth)acrylate, n-nonyl (meth)acrylate, isononyl (meth)acrylate, and n-decyl (meth)acrylate. Two or more kinds of alkyl (meth)acrylate monomers (a1) may be used in combination. Above all, it is preferable that the alkyl (meth)acrylate monomer (a1) comprises at least 2-ethylhexyl (meth)acrylate. The content of the alkyl (meth)acrylate monomer (a1) is preferably 80 to 99% by mass, more preferably 85 to 99% by mass, and particularly preferably 88 to 99% by mass, based on 100% by mass consisting of all components (as the monomer units) of the acrylic copolymer (A).

Concrete examples of the nitrogen-containing monomer (a2) include nitrogen-based hetero ring-containing monomers such as (meth)acryloylmorpholine, vinylpyrrolidone, and vinylcaprolactam; amide group-containing monomers such as (meth)acrylamide, N-methyl (meth)acrylamide, N,N-dimethyl(meth)acrylamide, and N,N-diethyl(meth)acrylamide; amino group-containing monomers such as aminoethyl (meth)acrylate, N,N-dimethylaminomethyl (meth)acrylate, N,N-dimethylaminoethyl (meth)acrylate, and (meth)acryloylmorpholine; imide group-containing monomers such as N-methyl maleimide, N-ethylmaleimide, N-propylmaleimide, N-butylmaleimide, and N-hexyl maleimide; and cyano group-containing monomers such as acrylonitrile, and methacrylonitrile. Two or more kinds of nitrogen-containing monomers (a2) may be used in combination. As the nitrogen-containing monomer (a2), an acrylic group-containing monomer is preferable. Further, a nitrogen-based hetero ring-containing monomer is preferable, and among them, (meth)acryloylmorpholine is particularly preferable. The content of the nitrogen-containing monomer (a2) is preferably 0.1 to 4% by mass, and more preferably 1 to 3% by mass, based on 100% by mass consisting of all components (as the monomer units) of the acrylic copolymer (A).

The acrylic copolymer (A) may contain other monomers as long as the effect of the present invention is not impaired, in addition to the alkyl (meth)acrylate monomer (a1) and the nitrogen-containing monomer (a2) described above. Concrete examples thereof include alkyl (meth)acrylate monomers having a linear and/or branched alkyl group having 1 to 5 carbon atoms such as methyl (meth)acrylate, ethyl (meth)acrylate, n-propyl (meth)acrylate, isopropyl (meth)acrylate, butyl (meth)acrylate, isobutyl (meth)acrylate, and n-pentyl (meth)acrylate; carboxyl group-containing monomers such as acrylic acid, methacrylic acid, itaconic acid, crotonic acid, maleic acid, fumaric acid, 2-carboxy-1-butene, 2-carboxy-1-pentene, 2-carboxy-1-hexene, and 2-carboxy-1-heptene; hydroxyl group-containing monomers such as hydroxymethyl (meth)acrylate, 2-hydroxyethyl (meth)acrylate, 3-hydroxypropyl (meth)acrylate, and 4-hydroxybutyl (meth)acrylate; and vinyl esters such as vinyl acetate, and vinyl propionate.

The weight-average molecular weight (Mw) of the acrylic copolymer (A) is preferably 200,000 to 1,500,000, more preferably 500,000 to 1,200,000, and particularly preferably 500,000 to 1,000,000. This weight-average molecular weight (Mw) is a value measured by a GPC method.

The acrylic copolymer (A) is obtained by copolymerizing a plurality of monomers. The polymerization method is not particularly limited. It can be produced, for example, by a known polymerization method such as a solution polymerization method, a bulk polymerization method, an emulsion polymerization method, and a suspension polymerization method using a polymerization initiator such as benzoyl peroxide, azobisisobutyronitrile, and potassium persulfate.

The acrylic adhesive composition of the present invention preferably further contains a curing agent. Concrete examples of the curing agent include isocyanate-based curing agents, epoxy-based curing agents, metal chelate-based curing agent, aziridine-based curing agents, and imidazole-based curing agents. Two or more types of curing agents may be used in combination. Among them, one or more curing agents (B) selected from the group consisting of isocyanate-based curing agents and epoxy-based curing agents are preferable. In particular, it is preferable that the curing agent (B) contains both an isocyanate-based curing agent and an epoxy-based curing agent. The isocyanate-based curing agent tends to enhance the followability of the acrylic adhesive composition to changes in the dimensions of the device member(s). The epoxy-based curing agent tends to increase the cohesive force of the acrylic adhesive composition, and as a result, the inclusion of both curing agents tends to improve both the prevention of generation of wrinkles and the fixing function of the device member(s).

Concrete examples of the isocyanate-based curing agent include tolylene diisocyanate, xylene diisocyanate, hexamethylene diisocyanate, isophorone diisocyanate, and modified prepolymers thereof. Two or more kinds of isocyanate-based curing agents may be used in combination.

Concrete examples of the epoxy-based curing agent include compounds having two or more epoxy groups such as N,N,N',N'-tetraglycidyl-1,3-benzenedi(methanamine), N,N,N',N'-tetraglycidyl-m-xylylenediamine, and 1,3-bis(N,N'-diglycidylaminomethyl) cyclohexane. Two or more types of epoxy-based curing agents may be used in combination.

In the acrylic adhesive composition of the present invention, for example, known additives such as tackifier resins, fillers, pigments, and flame retardants can be added. Specific examples of the pigment include black type fillers such as carbon black, and carbon nanotube. When the acrylic adhesive composition or the adhesive tape of the present invention is used for fixing a member such as an optical sheet in an optical device, and when the acrylic adhesive composition contains such a black type filler, it is advantageous in that light leakage from the side surface of the device can be suppressed.

When the acrylic adhesive composition of the present invention contains a tackifier resins, a modifying effect such as an increase in the adhesive force of the adhesive layer is exhibited. Concrete examples of the tackifier resin include rosin-based resins such as rosin esters, disproportionated rosin esters, and hydrogenated rosin ester; terpene-based resins such as terpene resins, aromatic modified terpene resins, hydrogenated terpene resins, and terpene phenol; petroleum resins such as aliphatic petroleum resins, aromatic petroleum resins, copolymer type petroleum resins, and alicyclic petroleum resins; pure monomer type resins such as coumarone-indene resins, and styrene resins; and condensation type resins such as phenol resins, and xylene resins. Two or more types of tackifier resins may be used in combination.

In the acrylic adhesive composition of the present invention, the amount of change in the value of the loss tangent (tan δ) in the range of 20°C to 100°C is within 0.5. In the case where this amount of change is within 0.5, stress caused by the size change of the device member(s) due to temperature change can be relaxed, and the generation of wrinkles of the device member(s) can be remarkably suppressed. On the other hand, in the case where the amount of change exceeds 0.5, i.e., when the dynamic viscoelasticity (viscosity/elasticity) of the acrylic adhesive composition changes significantly between normal temperature, or room or ambient temperature and high temperature, the acrylic adhesive composition exhibits such behavior closer to viscous one as compared with that at normal temperature. As a result, the acrylic adhesive composition cannot follow the size change of the device member(s) due to such temperature change from normal temperature to high temperature with return to normal temperature again, and it becomes difficult to suppress the generation of wrinkles. A specific method for measuring the amount of change in the value of the loss tangent (tan δ) will be described in the column of "Examples" described later.

### <Adhesive tape>

The adhesive tape of the present invention comprises an adhesive tape having at least one acrylic adhesive layer, which comprises of the acrylic adhesive composition of the present invention described above, and typically, it has an acrylic adhesive layer on at least one surface of a base material.

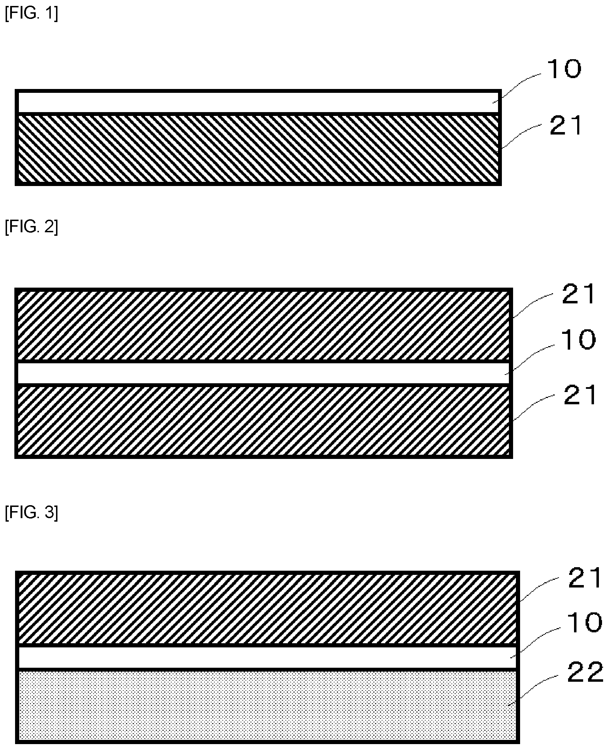

Figs. 1 to 3 are schematic cross-sectional views showing embodiments of an adhesive tape according to the present invention. The adhesive tape of the present invention may be a single-sided adhesive tape having an acrylic adhesive layer 21 composed of the acrylic adhesive composition of the present invention on one surface side of the base material 10 as shown in FIG. 1. Alternatively, the adhesive tape of the present invention may be a double-sided adhesive tape having an acrylic adhesive layer 21 comprising an acrylic adhesive composition according to the present invention on both surface sides of a base material 10 as shown in FIG. 2. Further, as shown in FIG. 3, the double-sided adhesive tape may have an acrylic adhesive layer 21 comprising an acrylic adhesive composition according to the present invention in one surface side of a base material 10 and another adhesive layer 22 in the other surface side of the base material.

The other adhesive layer 22 as shown in FIG. 3 has preferably 0.5 mm or less of magnitude of deviation from the initial position after 1 hour from the beginning of the measurement according to a measurement test of holding force to polycarbonate at 85°C (JIS-Z-1528). The specific method for measuring the holding force will be described in the column of "Examples" described later. The other adhesive layer 22 having such properties is particularly useful in applications for fixing an optical sheet to a body or housing of an optical device. In this case, it is preferable that the acrylic adhesive layer 21 side of the double-sided adhesive tape is attached to the optical sheet, and the other adhesive layer 22 side is attached to the body or housing. It is considered that the other adhesive layer 22 alone having such characteristics is useful in applications where holding force to polycarbonate is required (for example, applications for a housing of an optical device), even if the adhesive tape has no acrylic adhesive layer 21 composed of the acrylic adhesive composition of the present invention.

The type of the other adhesive layer 22 is not particularly limited, a known adhesive composition other than the acrylic adhesive composition of the present invention can be used. It is preferable to use an acrylic adhesive composition other than the acrylic adhesive composition of the present invention. The acrylic adhesive composition for forming the other adhesive layer 22 preferably comprises butyl (meth)acrylate as a main component of polymer chains. The content of butyl (meth)acrylate is preferably 50 to 99 % by mass, more preferably 55 to 96% by mass, particularly preferably 55 to 80% by mass, and most preferably 60 to 75% by mass, based on 100% by mass consisting of all components (as the monomer units) of the acrylic copolymer in the other adhesive layer 22.

The acrylic copolymer in the other adhesive layer 22 may contain an alkyl (meth)acrylate monomer other than butyl (meth)acrylate as a component of the polymer chains. For example, it may contain either an alkyl (meth) acrylate monomer having an alkyl group having 6 to 10 carbon atoms or a nitrogen-containing monomer. When an alkyl (meth)acrylate monomer having an alkyl group having 6 to 10 carbon atoms is contained, the content thereof is preferably 5 to 45% by mass, more preferably 15 to 40% by weight, and particularly preferably 20 to 35% by mass. Further, a hydroxyl group-containing monomer may be contained, but the content thereof is preferably 0 to 0.5% by mass (not contained or contained just in a small amount). Furthermore, a carboxyl group-containing monomer may also be contained, but the content thereof is preferably 0 to 4.5% by mass (not contained or contained just in a small amount).

Each thickness of the adhesive layers 21 and 22 is preferably 5 to 50 µm, and more preferably 10 to 30 µm, respectively. When the adhesive layer 21 is appropriately thick, the degree of deformation of the adhesive layer is increased. In such case, there is tendency that the dimensional change of a device member(s) can be sufficiently followed, and that generation of wrinkles of the device member(s) can be further suppressed. On the other hand, when the adhesive layers 21 and 22 are appropriately thin, they can be suitably used in applications where thinning is required (for example, liquid crystal display applications).

The type of the base material is not particularly limited, and a known base material may be used. Concrete examples thereof include polyester-based films such as polyethylene terephthalate (PET) films, polybutylene terephthalate (PBT) films, and polyethylene naphthalate (PEN) films; and olefin-based films such as polyethylene films, and polypropylene films. Above all, a base material made of a polyester-based film is preferable. When the base material is required to have a light-shielding property, a colored base material may be used. The colored base material can be obtained, for example, by mixing a pigment with a resin for forming the base material, or by providing a printed layer, a coated layer, a laminated layer or another colored layer on the base material.

The thickness of the base material is preferably 1 µm to 50 µm, and more preferably 2 µm to 30 µm. When the adhesive layer is appropriately thin, it can be suitably used in applications where thinning is required (for example, liquid crystal display applications).

The thickness of the adhesive tape of the present invention is preferably 60 µm or less, more preferably 7 to 50 µm, and particularly preferably 20 to 40 µm. When the adhesive tape is appropriately thin, it can be suitably used in applications wherein thinning is required (for example, liquid crystal display applications).

The light transmittance of the adhesive tape of the present invention is not particularly limited, and it may be appropriately set according to the intended use. For example, when used for fixing an optical sheet, the total light transmittance calculated as the average value of the transmittances at wavelengths of 380 to 780 nm is preferably 10% or more, and more preferably 15% or more.

The application of the adhesive tape of the present invention is not particularly limited, and it is useful in applications where it is required to suppress the generation of wrinkles due to size change of a product member(s) according to temperature change. In particular, in an optical device having an optical sheet (for example, a liquid crystal display), it is preferably used for fixing the optical sheet. In an optical device having such an optical sheet, each part other than the adhesive tape of the present invention are not particularly limited, and known parts may be used.

Concrete examples of the optical sheet include a prism sheet, a reflective sheet, a diffusion sheet, and a light-shielding sheet. Of these, a prism sheet and a reflective sheet are preferable. According to the present invention, the term "optical sheet" is used as the meaning including also an optical film (relatively thin optical sheet).

When the optical sheet is fixed by the adhesive tape of the present invention, it is possible to suppress the generation of wrinkles due to the size change of the optical sheet by temperature change. In particular, it is preferable that the optical sheet does not wrinkle even if it is stored for 1 hour in an atmosphere of a temperature of 85°C and a humidity of 85% RH after fixing the optical sheet with the adhesive tape. The specific evaluation method for the presence or absence of wrinkle generation will be described in the column of "Examples" described later.

### EXAMPLES

Hereinafter, the present invention will be described in more detail with reference to Examples. In the following descriptions, "part" means "part by mass".

### <Production Examples 1 to 6 (preparation of acrylic copolymer)>

Acrylic copolymers (A -1) to (A - 3) and (X-1) to (X- 3) containing the monomer components in the amounts (parts) shown in Table 1 as the constituent components of the polymer chain were prepared.

### [Table 1]

**Table 1 (Acrylic copolymer)**

| | (a1) | | | BA | (a2) | AA | Vac | 4-HBA | HMA | Mw (x10,000) |
|---|---|---|---|---|---|---|---|---|---|---|
| | 2-EHA | n0A | iNA | | ACMO | | | | | |
| A-1 | 92 | | | | 1.5 | 4.0 | 2.4 | 0. 1 | | 67 |
| A-2 | | 92 | | | 2.0 | 4.5 | 1.3 | 0. 2 | | 114 |
| A-3 | | | 92 | | 1.5 | 4.0 | 2.3 | 0.2 | | 111 |
| X-1 | 28 | | | 65 | | 3. 0 | 4.0 | | | |
| X-2 | 20. 8 | | | 76 | | 3. 0 | | | 0.2 | |
| X-3 | | | | 95 | | 5. 0 | | | | |

The abbreviations in Table 1 has the following meanings.
"2-EHA": 2-ethylhexyl acrylate
"nOA": n-octyl acrylate
"iNA": isononyl acrylate
"BA": butyl acrylate
"ACMO": acryloylmorpholine
"AA": acrylic acid
"Vac": vinyl acetate
"4-HBA": 4-hydroxybutyl acrylate
"HMA": hydroxymethyl acrylate

### <Examples 1 to 7 and Comparative Examples 1 to 4>

Curing agents (B) and the pigments were added to 100 parts of the acrylic copolymers (A) obtained in Production Examples 1 to 6, respectively, in the amounts (parts) shown in Tables 2 and 3 and the components were mixed to obtain each of adhesive compositions 1 and 2. As the curing agent (B), an isocyanate-based curing agent (manufactured by Tosoh Corporation, Coronate (registered trademark) L45E) and an epoxy-based curing agent (manufactured by Soken Chemical and Engineering Co., Ltd., trade name E-AX) were used in combination. As the pigments, powdered carbon black (acetylene black having an average particle size of 30 to 39 nm) was used.

The adhesive composition 1 was applied onto a release paper treated so as to be peelable having a thickness of 125 µm and dried by heating at 100°C to form an adhesive layer 1 having a thickness of 14 µm . Then, the adhesive layer 1 was transferred onto one surface side of a base material (a polyester film having a thickness of 4 µm (manufactured by Toray Industries, Inc., Lumirror (registered trademark) 4AF53)).

Separately, the adhesive composition 2 was applied on a release paper treated so as to be peelable having a thickness of 125 µm and dried by heating at 100°C to form an adhesive layer 2 having a thickness of 14 µm. Then, the adhesive layer 2 was transferred onto the surface of the base material opposite to the adhesive layer 1.

The base material having the adhesive layer 1 in one surface side and the adhesive layer 2 in the opposite surface side formed as described above was cured at 40°C for 3 days to obtain a double-sided adhesive tape having a total thickness of 32 µm.

### <Viscoelasticity measurement (amount of change in value of loss tangent (tan δ))>

Using each of the adhesive compositions 1 and 2 for the adhesive layers 1 and 2, in "Examples" and "Comparative Examples", a test piece for dynamic viscoelasticity measurement having a thickness of about 2 mm was fabricated. The test piece was set to a viscoelasticity tester (manufactured by Rheometric Scientific Inc., apparatus name RDA III), and the storage elastic modulus (G') and the loss elastic modulus (G") were measured under the conditions of a frequency of 10 Hz, a distortion of 0.1 % and a heating rate of 10°C/min. The loss tangent (tan δ) was calculated from the calculation formula of loss tangent (tan δ) = (G") / (G'), and the amount of change in the value of the loss tangent (tan δ) in the range of 20°C to 100°C was determined. The results are shown in Tables 2 and 3.

### <Anti-deflection test (generation of wrinkle)>

The adhesive layer 1 side of the double-sided adhesive tape in each of "Examples" and "Comparative Examples" was sticked to a PET film having a thickness of 50 µm using a 2 kg roller. Then, the adhesive layer 2 side was sticked to a polycarbonate resin plate (PC plate) having a thickness of 3.0 mm using a 2 kg roller, to fabricate a test piece for anti-deflection test having a size of 120 × 70 mm. This test piece was heated in an atmosphere of a temperature of 85°C and a humidity of 85% RH for 1 hour, and then left to stand in an atmosphere of a temperature of 23 ± 1°C and a humidity of 50 ± 5% for 1 hour. The presence or absence of generation of wrinkles in the PET film due to the stress generated by the size changes of the PET film and the PC plate was visually observed and evaluated according to the following criteria. The results are shown in Tables 2 and 1.
"o": No wrinkles were generated
"x": Wrinkles were generated

### [Table 2]

**Table 2**

| | | | Example 1 | Example 2 | Example 3 | Example 4 | Example 5 | Example 6 | Example 7 |
|---|---|---|---|---|---|---|---|---|---|
| Adhesive layer 1 | Polymer (A) | No. | A-1 | A-1 | A-1 | A-1 | A-2 | A-3 | A-1 |
| | Curing agent (B) | Isocyanate -based | 0.18 | 0.18 | 0.18 | 0.18 | 0.18 | 0.18 | |
| | | Epoxy -based | 0. 82 | 0. 82 | 0. 82 | 0. 82 | 0.82 | 0. 82 | 1.00 |
| | Other | Pigment | | 2 | | 2 | | | |
| | Amount of tanδ change | | Within 0.5 | Within 0.5 | Within 0.5 | Within 0.5 | Within 0.5 | Within 0.5 | Within 0.5 |
| Adhesive layer 2 | Polymer (A) | No. | A-1 | A-1 | X-1 | X-1 | A-2 | A-3 | A-1 |
| | Curing agent (B) | Isocyanate -based | 0.18 | 0.18 | 0.18 | 0.18 | 0.18 | 0.18 | |
| | | Epoxy -based | 0. 82 | 0. 82 | 0. 82 | 0. 82 | 0.82 | 0. 82 | 1.00 |
| | Other | Pigment | | 2 | | 2 | | | |
| | Amount of tanδ change | | Within 0.5 | Within 0.5 | Over 0.5 | Over 0.5 | Within 0.5 | Within 0.5 | Within 0.5 |
| Wrinkle generation | | | ○ | ○ | ○ | ○ | ○ | ○ | ○ |

### [Table 3]

**Table 3**

| | | | Comparative example 1 | Comparative example 2 | Comparative example 3 | Comparative example 4 |
|---|---|---|---|---|---|---|
| Adhesive layer 1 | Polymer(A) | No. | X-2 | X-3 | X-1 | X-1 |
| | Curing agent (B) | Isocyanate -based | 3. 33 | 1.27 | 1.27 | |
| | | Epoxy -based | | | | 1.27 |
| | Amount of tan*δ* change | | Over 0.5 | Over 0.5 | Over 0.5 | Over 0.5 |
| Adhesive layer 2 | Polymer(A) | No. | X-2 | X-3 | X-1 | X-1 |
| | Curing agent (B) | Isocyanate -based | 3. 33 | 1.27 | 1.27 | |
| | | Epoxy -based | | | | 1.27 |
| | Amount of tan *δ* change | | Over 0.5 | Over 0.5 | Over 0.5 | Over 0.5 |
| Wrinkle generation | | | × | × | × | × |

As shown in Table 2, in Examples 1 to 2 and 5 to 7, both the adhesive layers 1 and 2 were made of the acrylic adhesive composition of the present invention. In Examples 3 to 4, the adhesive layer 1 to be sticked to the PET film having a thickness of 50 µm (corresponding to an optical sheet) was made of the acrylic adhesive composition of the present invention. Further, as shown in Table 3, in Comparative Examples 1 to 4, both of the adhesive layers 1 and 2 were made of the acrylic adhesive compositions other than those according to the present invention. As shown in Tables 2 and 3, wrinkles were not generated in Examples 1 to 7 and wrinkles were generated in Comparative Examples 1 to 4, in the anti-deflection test.

### <Holding force>

The holding force of the double-sided adhesive tape of each of "Examples" and "Comparative Examples" was measured according to JAPANESE INDUSTRIAL STANDARD (JIS)-Z-1528. Specifically, one adhesive layer of a 20 × 20 mm double-sided adhesive tape was lined with a polyester film having a thickness of 25 µm, and the other adhesive layer was sticked to the polycarbonate resin (PC) plate as an adherend under an atmosphere of a temperature of 23 ± 1°C and a humidity of 50 ± 5%. The parts of the double-sided adhesive tape thus lined and attached to the adherend were crimped each other by reciprocating a 2 kg roller once on the polyester film surface and the double-sided adhesive tape thus crimped was left as it is for 20 minutes. Thereafter, under an atmosphere of 85°C, a vatical load of 4.9 N was applied to the double-sided adhesive tape and the double-sided adhesive tape under the loading was left for 1 hour. The magnitude (mm) of deviation from the initial position for 1 hour from the beginning of the test by loading or the time (minutes) until it peeled off from the adherend and fell was measured. The measurement of the holding force to PC was performed for each of the adhesive layer 1 and the adhesive layer 2. The results are shown in Tables 4 and 5.

### <Adhesive force>

According to JIS-Z-1528, the 180° adhesive force (N/20 mm width) of each of the double-sided adhesive tapes of "Examples" and "Comparative Examples" was measured. Specifically, one adhesive layer of the double-sided adhesive tape was lined with a polyester film having a thickness of 25 µm, and the other adhesive layer was sticked to the polycarbonate resin (PC) plate or the polyester resin (PET) plate as an adherend under an atmosphere of a temperature of 23 ± 1°C and a humidity of 50 ± 5%. The parts of the double-sided adhesive tape thus lined and attached to the adherend were crimped each other by reciprocating a 2 kg roller once on the polyester film surface and the double-sided adhesive tape thus crimped was left as it is for 20 minutes. Thereafter, using a tensile tester (manufactured by Toyo Seiki Seisakusho, device name STROGAPH E-L), it was peeled from the adherend under the conditions of a peeling angle of 180° and a peeling rate of 300 mm/min, and its adhesive force (N/20 mm) was measured. The measurement of the adhesive force to PC and the adhesive force to PET was performed for each of the adhesive layer 1 and the adhesive layer 2. The results are shown in Tables 4 and 5.

### [Table 4]

**Table 4**

| | | Example 1 | Example 2 | Example 3 | Example 4 | Example 5 | Example 6 | Example 7 |
|---|---|---|---|---|---|---|---|---|
| Holding force to PC | Adhesive layer 1 | Fell after 7 minutes | Fell after 8 minutes | Fell after 5 minutes | Fell after 7 minutes | Fell after 7 minutes | Fell after 6 minutes | Fell after 9 minutes |
| | Adhesive layer 2 | Fell after 6 minutes | Fell after 6 minutes | 0.1mm of deviation | 0.2mm of deviation | Fell after 8 minutes | Fell after 4 minutes | Fell after 7 minutes |
| Adhesive force to PC (N/20mm) | Adhesive layer 1 | 11.8 | 10.7 | 9.4 | 9.3 | 8.9 | 11.5 | 10.5 |
| | Adhesive layer 2 | 12.2 | 11.1 | 9.8 | 10.5 | 8.4 | 10.6 | 10.8 |
| Adhesive force to PET (N/20mm) | Adhesive layer 1 | 10.3 | 9. 7 | 9.2 | 8. 9 | 8. 8 | 10.8 | 10.2 |
| | Adhesive layer 2 | 11.3 | 10.0 | 8.8 | 10.3 | 9.0 | 11.8 | 9.5 |

### [Table 5]

**Table 5**

| | | Comparative example 1 | Comparative example 2 | Comparative example 3 | Comparative example 4 |
|---|---|---|---|---|---|
| Holding force to PC | Adhesive layer 1 | Fell after 12 minutes | Fell after 5 minutes | 0. 2mm deviation | 0. 2mm deviation |
| | Adhesive layer 2 | Fell after 15 minutes | Fell after 6 minutes | 0. 2mm deviation | 0. 2mm deviation |
| Adhesive force to PC (N/20mm) | Adhesive layer 1 | 7.8 | 10 | 9 | 8. 8 |
| | Adhesive layer 2 | 8. 3 | 8. 2 | 9. 6 | 8. 8 |
| Adhesive force to PET (N/20mm) | Adhesive layer 1 | 7.9 | 7 | 8. 6 | 8.7 |
| | Adhesive layer 2 | 8. 6 | 11.1 | 9. 6 | 10. 3 |

As shown in Table 4, the adhesive tapes of Examples 1 to 7 had such holding force and adhesive force in an acceptable level for practical use.

The adhesive tapes of Examples 3 to 4 (and adhesive tapes of Comparative Examples 3 and 4) were excellent particularly in the holding force to the polycarbonate resin (PC) plate. Thus, the adhesive tapes of Examples 3 to 4 are useful, for example, in applications for fixing an optical sheet to a housing of an optical device, because many housings of the optical devices are made of a polycarbonate resin composition or a composition similar thereto.

### Industrial Applicability

The acrylic adhesive composition and the adhesive tape of the present invention are useful in applications where it is required to suppress the generation of wrinkles due to size change of a device member(s) by temperature change. In particular, these are preferably used for fixing an optical sheet in an optical device (for example, liquid crystal displays) having the optical sheet.

### Description of Symbols

1: Base material
2: Acrylic adhesive layer composed of acrylic adhesive composition of the present invention
3: Other adhesive layer

## Claims

1. An acrylic adhesive composition comprising an acrylic copolymer (A), which comprises an alkyl (meth)acrylate monomer (a1) having a linear and/or branched alkyl group having 6 to 10 carbon atoms and a nitrogen-containing monomer (a2), as the components of polymer chains of the acrylic copolymer (A),
wherein an amount of change in the loss tangent (tan δ) value of the acrylic adhesive composition in the range of 20°C to 100°C is within 0.5.

2. The acrylic adhesive composition according to claim 1, wherein the acrylic copolymer (A) contains 80 to 99% by mass of the alkyl (meth)acrylate monomer (a1) as the components of the polymer chains.

3. The acrylic adhesive composition according to claim 1, wherein the acrylic copolymer (A) contains 0.1 to 4% by mass of the nitrogen-containing monomer (a2) as the components of the polymer chains.

4. The acrylic adhesive composition according to claim 1, further containing one or more curing agents (B) selected from the group consisting of isocyanate-based curing agents and epoxy-based curing agents.

5. An adhesive tape having at least one acrylic adhesive layer comprising the acrylic adhesive composition as described in claim 1.

6. The adhesive tape according to claim 5, wherein an acrylic adhesive layer comprising the acrylic adhesive composition as described in claim 1 is carried on one surface of a base material, while an adhesive layer other than the acrylic adhesive layer comprising the acrylic adhesive composition as described in claim 1 on the other surface of the base material.

7. The adhesive tape according to claim 6, wherein the adhesive layer other than the acrylic adhesive layer comprising the acrylic adhesive composition as described in claim 1 has 0.5 mm or less of a magnitude of deviation from the initial position after 1 hour by a measurement test of holding force to polycarbonate at 85°C (JIS-Z-1528).

8. The adhesive tape according to claim 5, which has a thickness of 60 µm or less.

9. The adhesive tape according to claim 5, wherein the total light transmittance calculated as the average value of the transmittances at wavelengths of 380 to 780 nm is 10 % or more.

10. The adhesive tape according to claim 5, which has a base material comprising a polyester film.

11. The adhesive tape according to claim 5, which is used for fixing an optical sheet.

12. The adhesive tape according to claim 11, wherein the optical sheet is a prism sheet or a reflective sheet.

13. The adhesive tape according to claim 11, wherein the optical sheet does not wrinkle even if it is stored for 1 hour in an atmosphere of a temperature of 85°C and a humidity of 85% RH after fixing the optical sheet with the adhesive tape.

14. An optical device having an optical sheet fixed by the adhesive tape as described in claim 5.

15. The optical device according to claim 14, which is a liquid crystal display.
